# EUROPEAN PATENT APPLICATION

(11) **EP 3 048 001 A1**
(43) Date of publication of application: **27.07.2016**
(21) Application number: 16151478.1
(22) Date of filing: 15.01.2016
(51) Int. Cl.: B60L 11/18, H01M 2/00

(54) **RAILROAD STORAGE BATTERY DEVICE**

(30) Priority: 20.01.2015 JP 2015008836
(71) Applicant: Kabushiki Kaisha Toshiba, Minato-ku Tokyo 105-8001 (JP)
(72) Inventor: KUROSU, Masahiro, Tokyo, 105-8001 (JP); KOSUGI, Shinichiro, Tokyo, 105-8001 (JP); SEKINO, Masahiro, Tokyo, 105-8001 (JP); KURODA, Kazuto, Tokyo, 105-8001 (JP); YASUI, Hideaki, Tokyo, 105-8001 (JP); HONDA, Mai, Tokyo, 105-8001 (JP); SATO, Masaki, Tokyo, 105-8001 (JP); ARAI, Tatsuya, Tokyo, 105-8001 (JP); NISHIKAWA, Akinobu, Tokyo, 105-8001 (JP); OGAWA, Kotaro, Tokyo, 105-8001 (JP); TAKAMATSU, Tomonao, Tokyo, 105-8001 (JP); YOSHIDA, Mitsunobu, Tokyo, 105-8001 (JP); NAKAHAMA, Takafumi, Tokyo, 105-8001 (JP); UJIIE, Akihiko, Tokyo, 105-8001 (JP); KONDO, Atsumi, Tokyo, 105-8001 (JP)
(74) Representative: Awapatent AB

(57) **Abstract**

According to one embodiment, a railroad storage battery device (22) includes a first and second resin assembled battery boxes (43), a battery management unit (31), and a metal box (35) mountable on a railroad vehicle (11) via an insulating member (36). The first resin assembled battery box (43) possesses an insulating property and accommodates a first battery cell group (41X) and a first cell monitoring device (42) monitoring charge and discharge of battery cells (41). The second resin assembled battery box (43) possesses an insulating property and accommodates a second battery cell group (41X) connected in series with first battery cell group (41X) and a second cell monitoring device (42) monitoring charge and discharge of battery cells (41). The battery management unit (31) controls first and second cell monitoring devices (42). The metal box (35) accommodates first and second assembled battery boxes (43) and battery management unit (31).

## Description

### FIELD

Embodiments described herein relate generally to a railroad storage battery device.

### BACKGROUND

Storage battery devices have recently been applied to railroads in view of energy use efficiency.

Application of such a storage battery device to a high voltage DC main circuit, however, requires a withstand voltage to be secured between a main circuit and a ground.

Furthermore, the railroad storage battery device may use a lithium ion battery in view of storage capacity and supplied current amount.

However, for safety purpose, the storage battery device using a lithium ion battery needs to include, near battery cells, a monitoring circuit that individually monitors the voltages and the temperatures of the battery cells.

To realize such a monitoring circuit for the railroad storage battery device in a simple structure having a sufficient withstand voltage, it is necessary to secure sufficient insulation distances (clearance or creepage distance) between the monitoring circuit and the lithium ion battery, between wirings the monitoring circuit, or between the monitoring circuit and a surrounding conductor. This may result in increasing the mechanical size of the device, which accordingly makes it difficult to accommodate the device in a railroad vehicle.

### BRIEF DESCRIPTION OF THE DRAWINGS

FIG. 1 illustrates the overall configuration of a railroad storage battery system including a railroad storage battery device according to a first embodiment; and
FIG. 2 illustrates the overall configuration of a railroad storage battery system including a railroad storage battery device according to a second embodiment.

### DETAILED DESCRIPTION

In general, according to one embodiment, a railroad storage battery device comprises a first and second resin assembled battery boxes, a battery management unit, and a metal box mountable on a railroad vehicle via an insulating member. The first resin assembled battery box possesses a certain insulating property and accommodates a first battery cell group and a first cell monitoring device monitoring charge and discharge of battery cells. The second resin assembled battery box possesses a certain insulating property and accommodates a second battery cell group connected in series with the first battery cell group and a second cell monitoring device monitoring charge and discharge of the battery cells. The battery management unit controls the first and second cell monitoring devices. The metal box accommodates the first and second assembled battery boxes and the battery management unit.

Embodiments will now be described in detail with reference to the accompanying drawings.

### First Embodiment

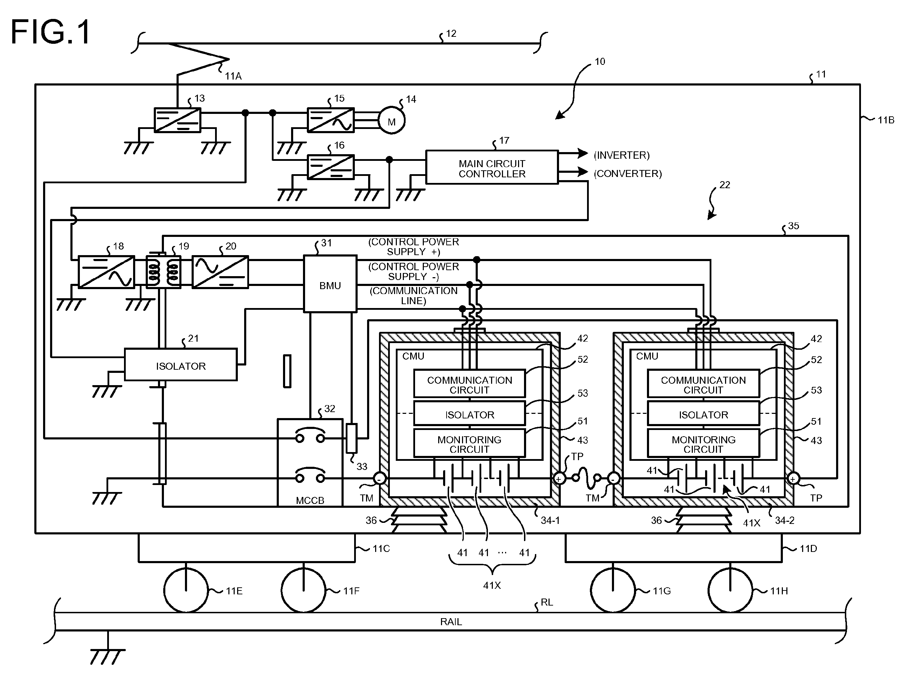

[1] FIG. 1 illustrates the overall configuration of a railroad storage battery system including a railroad storage battery device according to a first embodiment.

A railroad storage battery system 10 is mounted on a railroad vehicle 11. The railroad vehicle 11 includes a pantograph 11A, a vehicle body 11B, bogies 11C and 11D, and wheels 11E, 11F, 11G, and 11H.

The railroad storage battery system 10 includes a DC/DC converter 13 supplied with DC power from a DC overhead line 12 through the pantograph 11A to stabilize a voltage for output; an inverter 15 that converts the DC power output from the DC/DC converter 13 into AC power and supplies three-phase AC power to a power motor 14; an auxiliary power supply (APS) device 16 that converts the DC power output from the DC/DC converter 13 into DC power and supplies a control power supply to each element; a main circuit controller 17 that receives power supply from the APS device 16 to control an inverter 18 and an AC/DC converter 20 to be described later; the inverter 18 that converts DC power supplied from the APS device 16 into AC power; a transformer 19 with a primary side connected to the output of the inverter 18 ; the AC/DC converter 20 that receives output power from the inverter 18 through the transformer 19 and converts the AC power into DC power; an isolator 21 that establishes electrically isolated communication via optical fibers; and a storage battery unit 22 connected with the main circuit controller 17 through the transformer 19 and the isolator 21 and supplied with DC power from the DC overhead line 12 to charge and discharge under control of the main circuit controller 17.

In the above-described configuration, the DC power is supplied from the DC overhead line 12 through the pantograph 11A and grounded to the vehicle body 11B through the DC/DC converter 13 and the storage battery unit 22. The vehicle body 11B is grounded through the bogies 11C and 11D, the wheels 11E, 11F, 11G, and 11H, and a rail RL.

The storage battery unit 22 includes a battery management unit (BMU) 31 that controls the overall storage battery unit 22 under control of the main circuit controller 17; a molded case circuit breaker (MCCB) 32 that interrupts DC power supplied from the DC overhead line 12 under control of the BMU 31; a current detector 33 that detects a direct current amount supplied from the DC overhead line 12; a plurality (two in FIG. 1) of assembled battery units 34-1 and 34-2 each including a plurality of lithium ion battery cells connected in series to charge and discharge under control of the BMU 31; and a metal box 35 that accommodates therein the BMU 31, the MCCB 32, the current detector 33, and the assembled battery units 34-1 and 34-2.

In the above-described configuration, the plurality of lithium ion battery cells connected in series in each of the assembled battery units 34-1 and 34-2 are battery cells 41 connected in series with one another.

The metal box 35, which accommodates therein the BMU 31, the MCCB 32, the current detector 33, and the assembled battery units 34-1 and 34-2, is insulated from the railroad vehicle 11 by an insulating member 36 provided in the railroad vehicle 11.

The configurations of the assembled battery units 34-1 and 34-2 will now be described.

The assembled battery units 34-1 and 34-2 basically have the same configuration, so that only the assembled battery unit 34-1 will be cited.

The assembled battery unit 34-1 includes N (an integer equal to or larger than two) battery cells 41 connected in series between a low-potential side terminal TM and a high-potential side terminal TP; a cell monitoring unit (CMU) 42 that monitors and controls charge and discharge of each battery cell 41 under control of the BMU 31; and a assembled battery box 43 made from resin, to accommodate therein the battery cells 41 and the CMU 42 and double insulate between the low potential-side terminal TM and the high-potential side terminal TP e, and a ground.

In the above-described configuration, the N battery cells 41 form a battery cell group 41X.

The CMU 42 includes a monitoring circuit 51 that measures the voltage of each of the N battery cells 41 and the temperature thereof at a certain position; a communication circuit 52 that receives a control power supply from the BMU 31 and communicates with the BMU 31; and an isolator 53 having a photocoupler for establishing electrically isolated communication between the monitoring circuit 51 and the communication circuit 52.

A dielectric withstand voltage required for each element will now be described.

The dielectric withstand voltage (or dielectric strength) of the insulating member 36 is set so as to surely prevent dielectric breakdown when applied with the voltage of the assembled battery unit 34-1 alone or even the voltage (corresponding to the ground potential of the railroad vehicle 11, for example, 1800 volts) of all the battery cells of the assembled battery units 34-1 and 34-2 connected in series. This also applies to the assembled battery unit 34-2.

The assembled battery box 43 can be considered to be applied with the intermediate voltage (the intermediate potential) of the voltage of all the battery cells 41 connected in series. The assembled battery box 43 thus has such an insulating property for securely preventing dielectric breakdown against the applied intermediate voltage.

For example, if the voltage of all the battery cells of the assembled battery unit 34-1 or 34-2 connected in series is 1800 volts, the dielectric withstand voltage of the assembled battery box 43 is set so as to securely prevent dielectric breakdown at a half of the voltage, 900 volts. More specifically, the dielectric withstand voltage of the assembled battery box 43 is set at 2000 volts to 3000 volts.

This configuration accordingly makes it possible to reduce the dielectric withstand voltage of the isolator 53 of the CMU 42 accommodated in the assembled battery box 43. More specifically, the isolator 53 can be double insulated so that no dielectric breakdown occurs at the intermediate voltage of the voltage of all the battery cells 41 of the assembled battery unit 34-1 or 34-2 connected in series.

Specifically, if the voltage of all the battery cells of the assembled battery unit 34-1 or 34-2 connected in series is 1800 volts, the isolator 53 needs to have such an insulating property as a whole for securely preventing dielectric breakdown at a half of the voltage, 900 volts. The photocoupler of the isolator 53 can generally withstand a voltage up to around 1500 volts (more than 900 volts) and the dielectric withstand voltage of the whole isolator 53 is around 1200 volts (more than 900 volts). Thus, the dielectric withstand voltage is set sufficiently high to avoid dielectric breakdown.

The operation of the first embodiment will now be described.

Supplied with DC power from the DC overhead line 12 through the pantograph 11A, the DC/DC converter 13 of the railroad storage battery system 10 converts the DC power to DC power for stabilizing an output voltage and supplies the converted DC power to the inverter 15 and the APS device 16. The DC/DC converter 13 further supplies the DC power to the assembled battery units 34-1 and 34-2 through the MCCB 32.

The inverter 15 converts the output power (DC power) supplied from the DC/DC converter 13 into AC power and supplies the three-phase AC power to the power motor 14 to drive the power motor 14.

The APS device 16 converts the output power (the DC power) supplied from the DC/DC converter 13 into DC power and supplies a control power supply (for example, DC 100 volts) to the main circuit controller 17 and the inverter 18.

The main circuit controller 17 controls the inverter 18 to convert the DC power supplied from the APS device 16 into AC power.

Thereby, the converted AC power is supplied in an insulated state to the AC/DC converter 20 through the transformer 19.

The main circuit controller 17 controls the AC/DC converter 20 to convert the AC power supplied through the transformer 19 into DC power and supply the DC power to the BMU 31.

The main circuit controller 17 communicates with the BMU 31 through the isolator 21, acquires charge and discharge states of the assembled battery units 34-1 and 34-2, and executes feedback control of the inverter 18 and the AC/DC converter 20 according to the charge and discharge states of the assembled battery units 34-1 and 34-2.

In parallel with the feedback control, the BMU 31 measures a direct current amount supplied from the DC overhead line 12 through the MCCB 32 or a direct current amount flowing from the assembled battery units 34-1 and 34-2 to the DC/DC converter 13, the inverter 18, or the APS device 16, and detects whether an overcurrent flows. When detecting an overcurrent, the BMU 31 controls the MCCB 32 to interrupt the current path in order to protect the assembled battery units 34-1 and 34-2.

Meanwhile, when the direct current amount supplied from the DC overhead line 12 through the MCCB 32 or the direct current amount flowing from the assembled battery units 34-1 and 34-2 to the DC/DC converter 13, the inverter 18, or the APS device 16 falls in a normal range, the BMU 31 communicates with the monitoring circuit 51 of each of the assembled battery units 34-1 and 34-2 through a communication line, the communication circuit 52 and the isolator 53 of each of the assembled battery units 34-1 and 34-2, to acquire the voltage of each battery cell 41 and the temperature of each element.

The BMU 31 executes charge or discharge control over the battery cells 41 in the assembled battery units 34-1 and 34-2 through the CMUs 42 for maintaining the voltage of each battery cell 41 and the temperatures of the positions including the battery cells 41, the periphery of the battery cells 41, the monitoring circuits 51, and the periphery of the monitoring circuits 51 in a normal range.

As described above, the railroad storage battery device according to the first embodiment is configured to be able to reduce the dielectric withstand voltage of the isolator 53 which establishes electrically isolated communication between the monitoring circuit 51 and the communication circuit 52. The railroad storage battery system in a simple configuration can therefore be developed.

Furthermore, the railroad storage battery device according to the first embodiment can reduce the dielectric withstand voltages of the respective assembled battery boxes 43 accommodating the assembled battery units 34-1 and 34-2, in other words, can reduce the thickness of the resin, resulting in improving cooling efficiency of the battery cells 41 from outside. Consequently, this makes it less necessary to secure a clearance as the shortest distance to pass through a space between two conductive portions, a creepage distance as the shortest distance between two conductive portions along an insulating member, and a heat discharging space, thereby reducing the size of the assembled battery units 34-1 and 34-2 and reducing the size of the railroad storage battery system 10 accordingly.

### [2] Second Embodiment

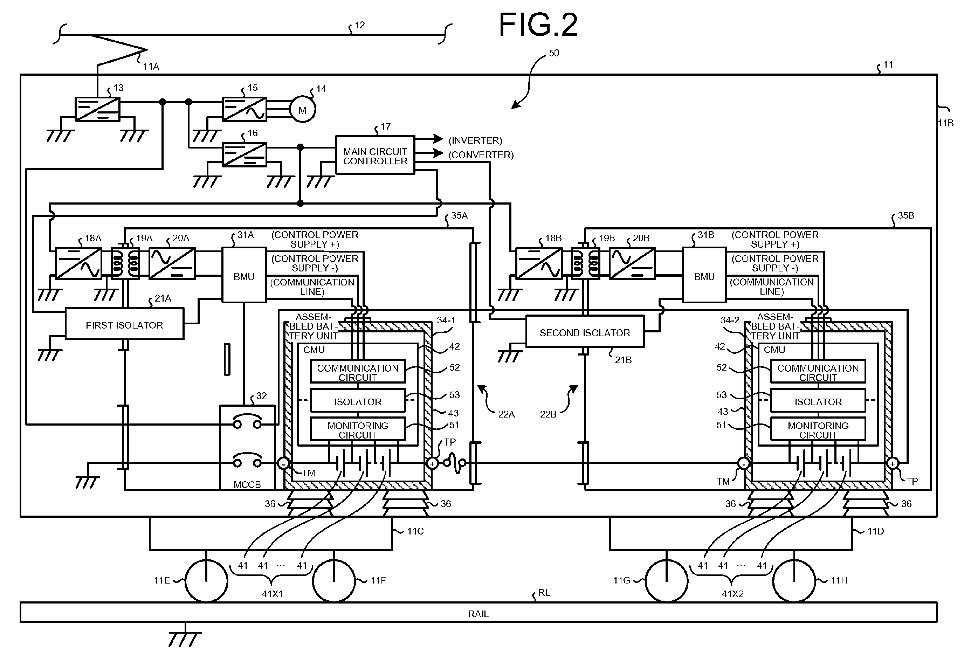

FIG. 2 illustrates the overall configuration of a railroad storage battery system including a railroad storage battery device according to a second embodiment. In FIG. 2, same or like elements as those of the first embodiment in FIG. 1 are denoted by same or like reference numerals.

A railroad storage battery system 50 includes the DC/DC converter 13 supplied with DC power from the DC overhead line 12 through the pantograph 11A for stabilizing a voltage for output; the inverter 15 that converts the DC power output from the DC/DC converter 13 into AC power and supplies three-phase AC power to the power motor 14; and the APS device 16 that converts the DC power output from the DC/DC converter 13 into DC power and supplies a control power supply to each element.

The railroad storage battery system 50 further includes the main circuit controller 17 that receives power from the APS device 16 to control a first inverter 18A, a second inverter 18B, a first AC/DC converter 20A, and a second AC/DC converter 20B to be described later; the first inverter 18A that converts DC power supplied from the APS device 16 into AC power; a first transformer 19A with a primary side connected to the output of the first inverter 18A ; the first AC/DC converter 20A that receives output power from the first inverter 18A through the first transformer 19A and converts the AC power into DC power; and a first isolator 21A that establishes electrically isolated communication via optical fibers.

The railroad storage battery system 50 further includes a storage battery unit 22A connected with the main circuit controller 17 through the first transformer 19A and the first isolator 21A to charge and discharge DC power supplied from the DC overhead line 12 under control of the main circuit controller 17; the second inverter 18B that converts DC power supplied from the APS device 16 into AC power; a second transformer 19B with a primary side connected to the output of the second inverter 18B; the second AC/DC converter 20B that receives output power from the second inverter 18B through the second transformer 19B and converts the AC power into DC power; a second isolator 21B that establishes electrically isolated communication via optical fibers; and a storage battery unit 22B connected with the main circuit controller 17 through the second transformer 19B and the second isolator 21B to charge and discharge DC power supplied from the DC overhead line 12 under control of the main circuit controller 17.

In the above-described configuration, the DC power is supplied from the DC overhead line 12 through the pantograph 11A and grounded to the vehicle body 11B through the DC/DC converter 13 and the storage battery units 22A and 22B. The vehicle body 11B is grounded through the bogies 11C and 11D, the wheels 11E, 11F, 11G, and 11H, and the rail RL.

The storage battery unit 22A includes the assembled battery unit 34-1 and a metal box 35A that accommodates therein a first battery management unit (BMU) 31A, the MCCB 32, and the assembled battery unit 34-1.

Similarly, the storage battery unit 22B includes the assembled battery unit 34-2 and a metal box 35B that accommodates therein a second battery management unit (BMU) 31B and the assembled battery unit 34-2.

In the above-described configuration, the metal box 35A that accommodates therein the assembled battery unit 34-1 and the metal box 35B that accommodates therein the assembled battery unit 34-2 are both insulated from the railroad vehicle 11 by the insulating members 36 provided in the railroad vehicle 11.

The high-potential side terminal TP of the assembled battery unit 34-1 is connected with the low-potential side terminal TM of the assembled battery unit 34-2. Thereby, a first battery cell group 41X1 of battery cells 41 in the assembled battery unit 34-1 is connected in series with a second battery cell group 41X2 of battery cells 41 in the assembled battery unit 34-2.

The dielectric withstand voltage required for each element in the second embodiment is almost the same as that in the first embodiment.

The operation of the second embodiment will now be described.

When receiving DC power from the DC overhead line 12 through the pantograph 11A, the DC/DC converter 13 of the railroad storage battery system 50 converts the DC power into DC power for stabilizing an output voltage to supply the converted DC power to the inverter 15 and the APS device 16. The DC/DC converter 13 further supplies the DC power to the assembled battery units 34-1 and 34-2 through the MCCB 32.

The inverter 15 converts the output power (DC power) supplied from the DC/DC converter 13 into AC power and supplies the three-phase AC power to the power motor 14 to drive the power motor 14.

The APS device 16 converts the output power (the DC power) supplied from the DC/DC converter 13 into DC power to supply a control power supply (for example, DC 100 volts) to the main circuit controller 17, the first inverter 18A, and the second inverter 18B.

The main circuit controller 17 controls the first inverter 18A and the second inverter 18B to convert the DC power supplied from the APS device 16 into AC power.

The converted AC power by the first inverter 18A is supplied in an insulated state to the first AC/DC converter 20A through the first transformer 19A.

The main circuit controller 17 controls the first AC/DC converter 20A to convert the AC power supplied through the first transformer 19A into DC power and supply the DC power to the first BMU 31A.

The main circuit controller 17 communicates with the first BMU 31A through the first isolator 21A, acquires a charge and discharge state of the assembled battery unit 34-1, and executes feedback control of the first inverter 18A and the first AC/DC converter 20A according to the charge and discharge state of the assembled battery unit 34-1.

In parallel with the feedback control, upon detecting an anomaly from the charge and discharge state of the assembled battery unit 34-1, the first BMU 31A controls the MCCB 32 to interrupt the current path to protect the assembled battery units 34-1 and 34-2.

Likewise, the converted AC power by the second inverter 18B is supplied in an insulated state to the second AC/DC converter 20B through the second transformer 19B.

The main circuit controller 17 controls the second AC/DC converter 20B to convert the AC power supplied through the second transformer 19B into DC power and supply the power to the second BMU 31B.

The main circuit controller 17 communicates with the second BMU 31B through the second isolator 21B, acquires a charge and discharge state of the assembled battery unit 34-2, and executes feedback control of the second inverter 18B and the second AC/DC converter 20B according to the charge and discharge state of the assembled battery unit 34-2.

The first BMU 31A and the second BMU 31B execute charge or discharge control of the battery cells 41 of the assembled battery units 34-1 and 34-2 through the CMUs 42, respectively, for maintaining the voltages of the battery cells 41 and the temperatures of the positions including the battery cells 41, the periphery of the battery cells 41, the monitoring circuits 51, and the periphery of the monitoring circuits 51 in a normal range.

As described above, the railroad storage battery device according to the second embodiment is also configured to be able to reduce the dielectric withstand voltage of the isolator 53 which establishes electrically isolated communication between the monitoring circuit 51 and the communication circuit 52. The railroad storage battery system in a simple configuration can therefore be developed.

Furthermore, according to the second embodiment, the assembled battery units 34-1 and 34-2 are separately accommodated in the metal boxes 35A and 35B. Because of this, it is made possible to further reduce the dielectric withstand voltage of the isolator 53 accommodated in each of the metal boxes 35A and 35B, thereby reducing the clearance and the creepage distance and further reducing the size of the device accordingly. Meanwhile, each of the metal boxes 35A and 35B needs to additionally include a transformer and an isolator so that the capacity of the metal boxes 35A and 35B is accordingly increased by the additional elements. The optimal number of assembled battery units can be thus determined by the trade-off between the increased capacity and the reduction in size. Preferably, the number of assembled battery units is two or three.

### [3] Modification of Embodiment

In the above embodiments, the battery cells are connected in series in the battery unit. Instead of this configuration, a plurality of sets of battery cells connected in series can be connected in parallel in the battery unit.

The above embodiments have described a DC overhead line as an example; however, the embodiments can be similarly applied to an AC overhead line.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A railroad storage battery device (22) comprising:
a first resin assembled battery box (43) that possesses a certain insulating property and accommodates therein a first battery cell group (41X) and a first cell monitoring device (42), the first battery cell group (41X) including a plurality of battery cells (41) supplied with power from an overhead line (12) for storage, the first cell monitoring device (42) monitoring charge and discharge of the battery cells (41);
a second resin assembled battery box (43) that possesses a certain insulating property and accommodates therein a second battery cell group (41X) and a second cell monitoring device (42), the second battery cell group (41X) including a plurality of battery cells (41) supplied with power from the overhead line (12) for storage and being connected in series with the first battery cell group (41X), the second cell monitoring device (42) monitoring charge and discharge of the battery cells (41);
a battery management unit (31) that controls the first cell monitoring device (42) and the second cell monitoring device (42); and
a metal box (35) mountable on a railroad vehicle (11) via an insulating member (36) to accommodate therein the first assembled battery box (43), the second assembled battery box (43), and the battery management unit (31).

2. A railroad storage battery device (22A; 22B) comprising:
a first resin assembled battery box (43) that possesses a certain insulating property and accommodates therein a first battery cell group (41X1) and a first cell monitoring device (42), the first battery cell group (41X1) including a plurality of battery cells (41) supplied with power from an overhead line (12) for storage, the first cell monitoring device (42) monitoring charge and discharge of the battery cells (41);
a second resin assembled battery box (43) that possesses a certain insulating property and accommodates therein a second battery cell group (41X2) and a second cell monitoring device (42), the second battery cell group (41X2) including a plurality of battery cells supplied with power from the overhead line (12) for storage and being connected in series with the first battery cell group (41X1), the second cell monitoring device (42) monitoring charge and discharge of the battery cells (41);
a first battery management unit (31A) that controls the first cell monitoring device (42);
a second battery management unit (31B) that controls the second cell monitoring device (42);
a first metal box (35A) mountable on a railroad vehicle (11) via an insulating member (36) to accommodate therein the first assembled battery box (43) and the first battery management unit (31A); and
a second metal box (35B) mountable on the railroad vehicle (11) via the insulating member (36) to accommodate therein the second assembled battery box (43) and the second battery management unit (31B).

3. The railroad storage battery device (22; 22A; 22B) according to claim 1 or 2, wherein
the insulating member (36) possesses an insulating property for withstanding at least a voltage of all of the battery cell groups (41X; 41X1; 41X2) connected in series relative to a ground potential of the railroad vehicle (11), and
the first or second assembled battery box (43) possesses an insulating property for withstanding at least a half of a voltage of all of the battery cell groups (41X; 41X1; 41X2) connected in series relative to the ground potential.

4. The railroad storage battery device (22; 22A; 22B) according to claim 1 or 2, wherein
the first or second cell monitoring device (42) includes:
a monitoring circuit (51) that monitors at least a voltage of the battery cell (41);
an isolator (53) for establishing an electrically isolated communication; and
a communication circuit (52) that performs the electrically isolated communication with the monitoring circuit (51) through the isolator (53).

5. The railroad storage battery device (22; 22A; 22B) according to claim 4, wherein the isolator (53) possesses an insulating property for withstanding at least a half of a voltage of all of the battery cell groups (41X; 41X1; 41X2) connected in series relative to the ground potential.

6. The railroad storage battery device (22; 22A; 22B) according to claim 1 or 2, wherein the battery management unit, the first battery management unit, or the second battery management unit (31; 31A; 31B) exchanges power and establishes communication with an outside through an isolating device (19, 21; 19A, 21A; 19B, 21B).

7. The railroad storage battery device (22; 22A; 22B) according to claim 6, wherein
the isolating device (19, 21; 19A, 21A; 19B, 21B) comprises:
a transformer (19; 19A; 19B) that exchanges the power; and
an optical fiber isolator (21; 21A; 21B) for establishing the communication.

8. The railroad storage battery device (22A; 22B) according to claim 2, wherein the first metal box (35A) and the second metal box (35B) are mounted on the same railroad vehicle (11) or separately mounted on a plurality of railroad vehicles (11).
